# EUROPEAN PATENT APPLICATION

(11) **EP 4 011 937 A1**
(43) Date of publication of application: **15.06.2022**
(21) Application number: 20213547.1
(22) Date of filing: 11.12.2020
(51) Int. Cl.: C08G 69/12, C08G 69/26, C08L 77/00, C08J 3/00, C08J 5/18

(54) **POLYAMIDE COMPOSITION USEFUL FOR THE MANUFACTURE OF FILM FOR FOOD PACKAGING**

(71) Applicant: ARKEMA FRANCE, 92700 Colombes (FR)
(72) Inventor: YASUDA, Maho, SHIMOGYO-KU, Kyoto 600-8815 (JP)
(74) Representative: Arkema Patent

(57) **Abstract**

The invention is directed in particular to a polyamide composition comprising :
(A) 70 - 99.9 wt.% of polyamide 6 and/or polyamide 66;
(B) 0.01 - 30 wt.% of at least one long chain semi-crystalline polyamide; and
(C) 0 - 30 wt.% of one or more additives,
it being understood that (A), (B) and (C) add up to 100 wt.%.

It also concerns a process for its manufacture, its use for the manufacture of films, films comprising said polyamide compositions and their use for food packaging, the use of semi-crystalline long chain polyamide to improve the break stress of a film comprising polyamide 6 and/or polyamide 66 and a food packaging comprising said polyamide composition or said film.

## Description

### [Technical Field]

The present application concerns a polyamide composition useful for the manufacture of film for food packaging with improved mechanical properties and a method for its manufacture. It also concerns its use for the manufacture of film, notably for food packaging, films produced from the polyamide composition, and food packages made using said polyamide composition or said film.

### [State of the Art]

Films for food packaging must meet certain requirements such as being safe for food contact and transparent. Further, their tear resistance should be within a specified range, that is, sufficiently high to avoid accidental breakage during transportation and handling, but sufficiently low so as to allow easy opening by the consumer. Moreover, their tensile strength should be sufficient to ensure safe wrapping of heavy foodstuff.

Films made from polyamide 6 are widely used for making film for food packaging. However, the high tear resistance of these films makes the opening of a food packaging difficult, and their tensile strength may limit their use for food packaging to lightweight foodstuff.

It is known, for instance from JPS6363748A, JP10728277A and JPH04314741 that some specific properties of polyamide 6 films may be altered by adding polyether block amides (PEBA). However, films made of such modified polyamide 6 may not be transparent. Further, recent concerns regarding the climate change trigger a trend towards durable materials made from renewable materials instead of fossil fuel.

### [Summary of the invention]

The invention thus has the aim to propose a polyamide composition for the manufacture of film for food packaging that is transparent, has an improved tensile strength and a reduced tear resistance compared to the unmodified polyamide. A further aim is to provide films for food packaging with such suitable properties that are obtained using renewable materials.

Indeed, the inventors have discovered that the addition of a long chain polyamide such as polyamide 11 to polyamide 6 and/or polyamide 66 even in small amounts improves significantly the tensile strength, while it decreases the tear strength and further preserves the transparency of films made thereof. Such polyamide compositions thus possess a superior property profile for food packaging applications compared to the unmodified polyamide.

Therefore, a first aspect of the invention is a polyamide composition comprising :
(A) 70 - 99.9 wt.% of polyamide 6 and/or polyamide 66;
(B) 0.01 - 30 wt.% of at least one long chain semi-crystalline polyamide; and
(C) 0 - 30 wt.% of one or more additives, it being understood that (A), (B) and (C) add up to 100 wt.%.

According to an embodiment, the component (A) is polyamide 6.

According to an embodiment, the polyamide composition comprises 0.1 to 10 wt.%, and in particular 0.1 to 3 wt.% of component (B). According to an embodiment, the component (B) comprises or is polyamide 11 or polyamide 12.

According to an embodiment, the polyamide composition has a relative viscosity of 1.0 to 3.0, as measured according to ISO 307-2019 in a solution of 0.005 g/mL in 96 wt.% sulfuric acid at 25°C.

According to an embodiment, the polyamide composition is in form of a film.

A second aspect of the invention is a process for the manufacture of a polyamide composition, comprising the steps consisting of:
(i) providing a polyamide (A) which is polyamide 6 and/or polyamide 66; and
(ii) mixing polyamide (A) with polyamide (B) which is at least one long chain semi-crystalline polyamide and optional one or more additives (C) in a suitable vessel to obtain a polyamide composition.

According to an embodiment, step (ii) above is carried out in the melt, as a dry blend or by dissolution/precipitation.

According to an embodiment, the process comprises a further step consisting of:
(iii) transforming the mixture obtained in step (ii) into a film.

According to an embodiment, step (iii) above is carried out by extrusion.

A third aspect of the invention is a film comprising said polyamide composition.

A fourth aspect of the invention is the use of said film for food packaging.

A fifth aspect of the invention is the use of a semi-crystalline long chain polyamide to improve the break stress of a film comprising polyamide 6 and/or polyamide 66.

A sixth aspect of the invention is a food-packaging comprising said polyamide composition or said film.

### [Description of embodiments of the invention]

### Definitions

Unless stated otherwise, all percentages, parts, ratios, etc., are by weight. Further, when an amount, concentration, or other value or parameter is given as either a range, preferred range or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range. It is not intended that the scope of the invention be limited to the specific values recited when defining a range. When a component is indicated as present in a range starting from 0, such component is an optional component (i.e., it may or may not be present).

Within the present application, the term **polymer** means a macromolecule of high relative molecular mass, the structure of which essentially comprises the multiple repetition of units derived, actually or conceptually, from molecules of low relative molecular mass. This term encompasses **homopolymers,** which derive from a single unit derived from one or more molecules of low relative molecular mass, and also **copolymers** which derive from two or more such units. The different units may be arranged in the copolymer either randomly or in a more regular fashion, such as in form of recurring sequences of units or blocks of units of a certain length. The latter copolymers are called block copolymers.

The term **polyamide** designates a polymer with repeating units linked by amide bonds. Within the present application, polyamides are designated as prescribed by standard ISO 1874-1.

The term **long chain polyamide** is meant to designate a polyamide having, on average, 8 or more, in particular 9 or more, and preferably 10 or more carbon atoms for each nitrogen atom.

The term **semi-crystalline** polymer is understood to mean a polymer whose fusion enthalpy of more than 30 J/g, as measured according to ISO 11357-3 (1999), using differential scanning calorimetry and a heating rate of 20°C/min.

The term « **polyamide composition** » or « **polyamide mixture** » is understood to mean a macroscopically homogeneous composition of polyamides. The term also encompasses such compositions that are composed of non-miscible phases and dispersed at micrometric level.

The term "**copolyamides**" means polyamides derived from two or more different repeating units linked by amide bonds.

The term "**monomer**" in the context of polyamides has to be taken within the meaning of "repeat unit". Indeed, in case the repeat unit of a polyamide is composed of a combination of a diacid with a diamine, the monomer is represented by the combination of said diamine and diacid, that is to say the diamine.diacid pair (in equimolar amounts). Indeed, individually, the diacid or the diamine is only a structural unit, and not capable in itself to polymerize.

The term "Thermoplastic resins" designates polymeric materials that can flow when heated under pressure.

The term "**transparent film**" is understood as meaning a film that, for a thickness of 35 µm, exhibits a Haze of not more than 5%, preferably not more than 4%, in particular not more than 3%, and especially not more than 2%, as measured according to ASTM D 1003-97 Procedure B, using a spectrophotometer (Konica Minolta model CM-3610d) in transmittance and Haze mode with a wavelength range from 360 to 740 nm and a wavelength pitch of 10 nm, under standard Illuminant A and at an angle of 10 degrees.

The term « **glass transition temperature** » designates the temperature at which a polymer at least partially amorphous passes from a rigid glassy state to a soft but unmelted state, or vice versa, as measured by Differential Scanning Calorimetry (DSC) following the standard NF EN ISO 11 357-2 using a heating rate of 20°C/min.

This invention provides a polymeric blend of polyamide 6 and/or polyamide 66 with a small quantity of a long chain semi-crystalline polyamide to provide polyamide compositions that are highly suitable for applications that require a high break strength, a medium tear strength along with high transparence.

As stated above, the invention proposes a polyamide composition comprising :
(A) 70 - 99.9 wt.% of polyamide 6 and/or polyamide 66;
(B) 0.01 - 30 wt.% of at least one long chain semi-crystalline polyamide; and
(C) 0 - 30 wt.% of one or more additives, it being understood that (A), (B) and (C) add up to 100 wt.%.

The polyamide 6 (PA 6) and polyamide 66 (PA 66) used as component (A) in the polyamide composition of the present invention are well known to those skilled in the art and widely available on the market. The polyamide 6 and polyamide 66 can be used alone, or as a blend. The weight ratio of polyamide 6/polyamide 66 in the blend can range from 1: 99 to 99: 1. The weight ratio in the polyamide 6/polyamide 66 blend may in particular range from 1: 99 to 10: 90, or from 10: 90 to 20: 80, or from 20: 80 to 30: 70, or from 30: 70 to 40: 60, or from 40: 60 to 50: 50, or from 50: 50 to 60: 40, or from 60: 40 to 70: 30, or from 70: 30 to 80: 20, or from 80: 20 to 90: 10, or from 90: 10 to 99: 1.

More specifically, polyamide 6 is the condensation product of caprolactam or aminocaproic acid, and polyamide 66 is the condensation product of adipic acid and hexamethylene diamine.

Polyamide 6 and/or polyamide 66 useful in the present invention have preferably a melt flow rate (MFR) of 10 to 80, notably 15 to 70, preferably 20 to 50, and in particular 30 to 40 g/10min at 270°C under a load of 2.16 kg, as measured according to standard ISO 1133.

According to the invention, the polyamide composition of the invention comprises 70 to 99.9 wt.% of component (A). The composition may in particular comprise from 70 to 75 wt.%, or from 75 to 80 wt.%, or from 80 to 85 wt.%, or from 85 to 90 wt.%, or from 90 to 95 wt.%, or from 95 to 98 wt.%, or from 98 to 99 wt.%, or from 99 to 99.5 wt.%, or from 99.5 to 99.9 wt.% of component (A). Particularly preferred are compositions that comprise 80 to 95 wt.%, especially 87 to 92 wt.% of component (A).

The semi-crystalline long chain polyamide used as component (B) to modify the film properties of the short chain polyamide are also well-known to those skilled in the art. It may be a homopolyamide or copolyamide. It may further be an aliphatic polyamide or a semi-aromatic polyamide. The semi-crystalline long chain polyamide used as component (B) may be a single polyamide or a mixture of two, three or more polyamides.

The semi-crystalline long chain polyamide used in the present invention may be in particular selected from the group consisting of : PA 610, PA 612, PA 11, PA 12, PA 910, PA 912, PA 913, PA 914, PA 915, PA 916, PA 918, PA 936, PA 1010, PA 1012, PA 1013, PA 1014, PA 1210, PA 1212, PA 1213, PA 1214, PA 614, PA 613, PA 615, PA 616, PA 618, PA MXD10, PA 12T, PA 10T, PA 18T, PA 11/10T, PA 11/6T random and/or block copolymers and mixtures thereof. Linear aliphatic polyamides are particularly preferred. Particularly preferred semi-crystalline polyamides are PA 11, PA 12, PA 1010, PA 610 and mixtures thereof.

The long chain polyamide used as component (B) preferably has a melt flow rate (MFR) of 1.0 to 8.0, notably 1.5 to 7.0, preferably 1.7 to 5.0, and in particular 2.0 to 4.0, and especially 2.2 to 3.0 g/10min at 250°C under a load of 2.16 kg, as measured according to standard ISO 1133.

According to the invention, the polyamide composition comprises 0.01 to 30 wt.% of component (B). The polyamide composition may in particular comprise from 0.1 to 0.5 wt.%, or from 0.5 to 1 wt.%, or from 1 to 2 wt.%, or from 2 to 5 wt.%, or from 5 to 10 wt.%, or from 10 to 15 wt.%, or from 15 to 20 wt.%, or from 20 to 25 wt.%, or from 25 to 30 wt.% of component (B). Particularly preferred are polyamide compositions that comprise 5 to 20 wt.%, and especially 8 to 13 wt.% of component (B).

As stated above, the composition according to the present invention can additionally comprise one or more additives as a component (C).

Such additives may be in particular conventional additives used in polymeric materials including: plasticizers, stabilizers, antioxidants, ultraviolet ray absorbers, hydrolytic stabilizers, anti-static agents, dyes or pigments, fillers, fire-retardants, lubricants, reinforcing agents such as glass fiber and flakes, processing aids, anti-block agents, release agents, and/or mixtures thereof.

The polyamide composition according to this invention comprises from 0 to 30 wt.% of component (C). The polyamide composition may in particular comprise from 0.1 to 0.5 wt.%, or from 0.5 to 1 wt.%, or from 1 to 2 wt.%, or from 2 to 5 wt.%, or from 5 to 10 wt.%, or from 10 to 15 wt.%, or from 15 to 20 wt.%, or from 20 to 25 wt.%, or from 25 to 30 wt.% of component (C). Particularly preferred are polyamide compositions that comprise from 0.5 to 20 wt.%, preferably from 1 to 15 wt.%, especially from 2 to 10 wt.% of component (C).

According to a particular embodiment, the polyamide composition is a microscopically homogeneous blend, mainly or exclusively composed of miscible phases. In particular, it is preferred that component (A) and component (B) are present in the composition essentially in form of miscible phases.

Preferably, the polyamide composition has a glass transition temperature comprised in the range from 20 to 100°C, in particular from 25 to 80°C, more preferred from 30 to 70°C and especially from 40 to 60°C.

According to a particular embodiment, the polyamide composition has a single melting point. However, compositions that exhibit two or more melting points may also be useful within the present invention. Preferably, the melting point or, in case of multiple melting points, at least one melting point is comprised in the range from 120 to 270°C, in particular from 150 to 250°C, more preferred from 180 and 240°C and especially between 200 and 220°C.

According to a preferred embodiment, the polyamide composition has a relative viscosity of 1.0 to 3.0, preferably of 1.2 and 2.4, in particular of 1.4 to 2.2, and especially from 1.6 - 2.0 g/mL as measured according to ISO 307-2019 in a solution of 0.005 g/mL in 96 wt.% sulfuric acid at 25°C.The polyamide composition of the invention may be used in any form, however, it is generally preferred to use it in form of pellets, granules or powder.

The polyamide composition of the invention may be manufactured using any one of the methods for mixing polymers known to those skilled in the art. In particular, the composition may be produced by mixing in the melt, by dry blend or by dissolution/precipitation processes. Preferably, the composition is mixed in the melt in an extruder, for instance a single-screw or twin-screw extruder. The mixture obtained may subsequently be pelletized into granules or directly extruded into film shape. The dissolution / precipitation process include the dissolution or dispersion of the components in a suitable solvent followed by the precipitation of the composition therefrom in form of a powder.

The polyamide composition of the invention can be formed into articles by various means known to those skilled in the art. For example, the compositions can be (co)extruded and formed into a film by various film-forming means. Examples of articles of this invention comprising a composition as described herein include in particular films used as packaging for foodstuffs.

Articles of the invention may further comprise other components. For example, polyamide compositions may be included as one or more layers of a multilayer polymeric structure in which additional layers of thermoplastic resins may be included to provide functional layers to provide additional functionality to the article. The layer(s) of the polyamide composition and other polymeric layers may be formed independently and then adhesively attached to one another to form an article of this invention. The article of this invention may also be fabricated by extrusion coating or laminating some or all of the layers onto a substrate. Some of the components of an article of this invention may be formed together by coextrusion, particularly if the components are relatively coplanar. Thus, an article of this invention may be a film or sheet comprising a layer of the polyamide composition and one or more additional layers of different thermoplastic material(s) in a multilayer coextruded film or sheet.

Examples of other thermoplastic materials that can be used to form a component of an article in addition to a component formed from the polyamide compositions in multicomponent or multilayer structures can notably be selected from thermoplastic polymers and copolymers.

Such thermoplastic resins include thermoplastic elastomers, such as polyurethane; poly-ether-ester; poly-amide-ether; polyether-urea; PEBA (block copolymers based on polyether block amides); styrenebutadiene-styrene (SBS) block copolymers; styrene(ethylene-butylene)-styrene block copolymers; polyamide (oligomeric and polymeric) other than those mentioned above; polyesters; polyolefins, including polyethylene, polypropylene, ethylene/propylene copolymers, ethylene copolymers with various comonomers, such as vinyl acetate, (meth)acrylates, (meth)acrylic acid, epoxy-functionalized monomer, CO; and functionalized polymers with maleic anhydride, or by epoxidization, either by copolymerization or by grafting, and elastomers such as EPDM or metallocene catalyzed PE.

The additional thermoplastic polymer components can be selected in particular from among copolyetheresters, copolyetheramides, elastomeric polyolefins, styrene diene block copolymers, and thermoplastic polyurethanes, these classes of polymers being well known in the art.

This invention also relates to films prepared from the compositions described above. Such films may be in particular blown films, cast films or laminated films.

Depending on the application, the thickness and dimensions of the films of the invention may vary largely. However, most often, the film thickness is comprised from 1 to 500 µm, and in particular from 2 µm to 300 µm, notably from 5 µm to 200 µm, and especially from 10 to 80 µm. Depending on the application, the film thickness may be comprised from 10 to 20 µm, or from 20 to 30 µm, or from 30 to 40 µm, or from 40 to 50 µm, or from 50 to 60 µm, or from 60 to 70 µm, or from 70 to 80 µm, or from 80 to 90 µm, or from 90 to 100 µm.

Depending on the application, the transparency of the films of the invention can differ. Generally, the films exhibit a Haze of not more than 5%, preferably not more than 4%, in particular not more than 3% and especially not more than 2% for a thickness of 35 µm, as measured according to ASTM D 1003-97 Procedure B, using a spectrophotometer (Konica Minolta model CM-3610d) in transmittance and Haze mode with a wavelength range from 360 to 740 nm and a wavelength pitch of 10 nm, under standard Illuminant A and at an angle of 10 degrees.

A laminate film can be prepared by coextrusion as follows: granulates of the various components are melted in extruders. The molten polymers are passed through a die or set of dies to form layers of molten polymers that are processed as a laminar flow. The molten polymers are cooled to form a layered structure. Molten extruded polymers can be converted into a film using a suitable converting technique. For example, a film of the invention can also be made by coextrusion followed by lamination onto one or more other layers. Other suitable converting techniques are, for example, blown film extrusion, cast film extrusion, cast sheet extrusion and extrusion coating.

A film of the invention can be further oriented beyond the immediate quenching or casting of the film. The process comprises the steps of (co)extruding a laminar flow of molten polymers, quenching the (co)extrudate and orienting the quenched (co)extrudate in at least one direction. The film may be uniaxially oriented, or it can be biaxially oriented by drawing in two mutually perpendicular directions in the plane of the film to achieve a satisfactory combination of mechanical and physical properties. Orientation and stretching apparatus to uniaxially or biaxially stretch film are known in the art and may be adapted by those skilled in the art to produce films of the invention.

In an embodiment of the present invention, a film of the present invention is oriented using a double bubble extrusion process, where simultaneous biaxial orientation may be effected by extruding a primary tube which is subsequently quenched, reheated and then expanded by internal gas pressure to induce transverse orientation, and drawn by differential speed nip or conveying rollers at a rate which will induce longitudinal orientation.

The processing to obtain an oriented blown film is known in the art as a double bubble technique, and can be carried out as described in US 3,456,044. More particularly, a primary tube is melt extruded from an annular die. This extruded primary tube is cooled quickly to minimize crystallization and then collapsed. It is then heated to its orientation temperature (for example, by means of a water bath). In the orientation zone of the film fabrication machine a secondary tube is formed by inflation, thereby the film is radially expanded in the transverse direction and pulled or stretched in the machine direction at a temperature such that expansion occurs in both directions, preferably simultaneously; the expansion of the tubing being accompanied by a sharp, sudden reduction of thickness at the draw point. The tubular film is then again flattened through nip rolls. The film can be reinflated and passed through an annealing step (thermofixation), during which step it is heated once more to adjust the shrink properties. In some applications, it may be desirable to maintain the film in a tubular form. For preparing flat films the tubular film can be slit along its length and opened up into flat sheets that can be rolled and/or further processed.

A film obtained from a composition described herein can be used as a monolayer film.

The film obtained can also be used in various combinations with other film layers thereby forming a multilayer film. Examples of multilayer structures of this invention, particularly in the form of films, include (from outermost to innermost product-contact layer of the film):
Modified polyamide/tie/sealant; Modified polyamide/tie/EVOH/tie/sealant; and
Modified polyamide/tie/EVOH/modified polyamide/tie/bulking layer/ sealant.

The modified polyamide in these structures provides improved break stress along with good temperature resistance, barrier properties, puncture resistance, thermoformability, and/or a printable surface. EVOH may be included as an additional barrier layer. The sealant can be a variety of polymers, but is preferably polyethylene, ethylene/vinyl acetate copolymer or an ionomer. These are suitable for packaging a wide variety of food.

Some of the films or sheets described above can be used as forming webs in thermoforming operations to provide shaped articles for packaging. Polyamides of the present invention can be thermoformed at temperatures within the range of from about 100°C to about 180°C. Typically the thermoformed articles are shaped to conform to the shape of the product that is contained within the package. Thermoformed packages can be used to contain processed meats such as hot dogs, sausages and the like.

Another example multilayer film structure is a structure of polyethylene/tie/modified polyamide/tie/polyethylene. This film is useful as a chub film for meat packaging and shrink films.

The present invention also provides a food packaging for containing a foodstuff comprising the composition described above. Such package may be in particular a monolayer or multilayer film or sheet.

As shown in the examples below, the inventors discovered that the polyamide compositions of the invention, obtained by addition of a minor amount of a long chain polyamide into polyamide 6 or polyamide 66, show an improved property profile for film for food packaging when compared to films made from the unmodified short chain polyamide.

More specifically, such polyamide compositions improves the break stress, and allows thus for more resistant packaging. The polyamide compositions further exhibit reduced the tear strength, which is favorable for food packaging as it facilitates the opening of the packaging by the end user. Finally, the polyamide compositions have a preserved transparency, which is a favorable property as it allows to see the foodstuff packaged therein.

The invention thus proposes also the use of long chain polyamides such as polyamide 11 to improve the break stress of a film made of polyamide 6 and/or polyamide 66. The invention also proposes the use of long chain polyamides such as polyamide 11 to reduce the tear strength of a film made of polyamide 6 and/or polyamide 66.

The invention is explained in more detail in the following examples.

### [EXAMPLES]

### Materials used:

Polyamide 6: Amilan^{®} CM1021 FS (from Toray, in pellet form)
Polyamide 11: Rilsan^{®} BESNO TL (from Arkema, in pellet form)
Polyether block amide (PEBA): Pebax 40R53 SP01 (from Arkema, in pellet form)

### EXAMPLES 1 to 4

Different polyamide compositions were prepared wherein polyamide 6 was modified by addition of different quantities of polyamide 11.

The compositions of examples 1 to 4 were manufactured by dry-blending the polyamide pellets in a weight ratio as set out in table 1 below.

The glass transition temperature of the polyamide compositions were measured by Differential Scanning Calorimetry (DSC) following the standard NF EN ISO 11357-2 using a heating rate of 20°C/min.

The relative viscosity of the polyamide compositions was measured according to ISO 307-2019 in a solution of 0.005 g/mL in 96 wt.% sulfuric acid at 25°C.

**Table 1: Formulation of Polyamide Compositions**

| **Example** | **1** | **2** | **3** | **4** | **C1** | **C2** | **C3** | **C4** |
|---|---|---|---|---|---|---|---|---|
| Polyamide 6 [wt.%] | 97 | 95 | 90 | 70 | 100 | 97 | 95 | 70 |
| Polyamide 11 [wt.%] | 3 | 5 | 10 | 30 | - | 3 | 5 | 30 |
| Total [wt.%] | 100 | 100 | 100 | 100 | 100 | 100 | 100 | 100 |
| Tg [°C] | 51.7 | 49.9 | 49.9 | 50.4 | 54 | 51.3 | 52.8 | 52.3 / 30.5 |
| Relative viscosity [g/mL] | 1.89 | 1.84 | 1.81 | 1.72 | N.D. | N.D. | N.D. | N.D. |

The mixtures obtained were dried for 12 hours at 80 °C before being extruded. The dried mixture was introduced through the hopper into a single screw extruder with three temperature zones (HAAKE PolyDrive R252) equipped with a cylinder (diameter 19.05 mm, temperature 240°C), a screw (L/D 5, mixing type), and a T-die (dimensions 150mm x 0.4 mm) under the conditions below to produce films with a thickness of 35 µm and a width of 150 mm.

The temperature profile in the extruder were set as indicated in table 2 below.

**Table 2 : Film extruding conditions**

| **Zone** | **EX 1** | **EX 2** | **EX 3** | **EX 4** | **EX C1** | **EX C2** | **EX C3** | **EX C4** |
|---|---|---|---|---|---|---|---|---|
| TS 1 [°C] | 210 | 210 | 210 | 210 | 210 | 210 | 210 | 210 |
| TS 2 [°C] | 230 | 230 | 230 | 230 | 230 | 230 | 230 | 230 |
| TS 3 [°C] | 240 | 240 | 240 | 240 | 240 | 240 | 240 | 240 |
| AP 1 [°C] | 235 | 235 | 240 | 240 | 235 | 235 | 240 | 240 |
| AP2 [°C] | 235 | 235 | 240 | 240 | 235 | 235 | 240 | 240 |
| D1 (FTR) [°C] | 235 | 235 | 240 | 240 | 235 | 235 | 240 | 240 |
| D2 (side) [°C] | 240 | 240 | 240 | 245 | 235 | 240 | 240 | 240 |
| TM1 [°C] | 232 | 231 | 235 | 235 | 231 | 232 | 235 | 235 |
| M [Nm] | 21-29 | 22-28 | 20-23 | 20 | 34.5 | 19-23 | 18-21 | 22.8 |
| N [rpm] | 27 | 26 | 26 | 28 | 32 | 25 | 27 | 28 |
| P1 [bar] | 21 | 18-19 | 19 | 19 | 18 | 13 | 9 | 9 |

The symbols in table 2 above designate the following:
TS 1 = Front plate zone
TS 2 = Mixer chamber zone
TS 3 = Rear temperature zone
AP1 = Adapter (extruder side)
AP2 = Adapter (die side)
D1 (FTR) = Die (adapter side)
D2 (side) = Die (lip side, edge of the T die)
TM1 = Melting temperature
M = Torque applied
N = screw rotation speed
P1 = Pressure

The extruded films were then passed through a roll set at a temperature of 20 °C.

### COMPARATIVE EXAMPLE C1

So as to evaluate the effect of the modification of polyamide 6, films with a thickness of 35 µm and a width of 150 mm were produced under the same conditions, but using only polyamide 6.

### COMPARATIVE EXAMPLE C2 - C4

So as to evaluate the effect of the modification of polyamide 6 with other polymers, films with a thickness of 35 µm and a width of 150 mm were produced under the same conditions, but using mixtures of polyamide 6 with a polyether block amide (PEBA).

### Evaluation of tensile strength

For each of the films produced in examples 1 to 4 and comparative examples C1 to C4, five dumbbells shapes (ASTM638-Type 4) were produced by punching out the shape from the film. The punched out dumbbells produced were conditioned at 23 °C at 50 % RH for at least one week prior to evaluation.

The tensile strength of the dumbbells was measured on a benchtop tensiometer testing unit (INSTRON MODEL 4443) using a cell load of 1kN, a grip span of 65 mm and a speed of 50 mm/min (1 mm/min up to 2 % strain, the strain being measured by grip distance). Table 3 below summarizes the results for the films according to the invention (examples 1 to 4), a PA 6 film as a comparison (example C1) and films made of mixtures of PA 6 with PEBA (examples C2 to C4).

The results show that films made of the compositions of the invention have improved mechanical properties in terms of modulus, yield stress, break stress and break strain. Further, the addition of quantities as small as 3 or 5 wt.% of polyamide 11 shows significant effects on these mechanical properties (see examples 1 and 2). The study further provides evidence that addition of 10 wt.% or more of polyamide 11 does not lead to reliable further improvement of most properties (see examples 3 and 4). Also it is noted that at 5 wt.% and more of polyamide 11, the break strain stays about constant (see examples 2, 3 and 4) while at 30 wt.% of polyamide 11, the modulus improves but the yield strain drops significantly (see example 4).

In contrast, the break stress of films made of compositions of PA 6 with PEBA is notably lower compared to pure PA 6 (see examples C2 to C4 and C1).

According to these results, adding even a small quantity such as 3 or 5 wt.% of polyamide 11 to the polyamide 6 allows for substantial improvements of the film strength. However, adding more than 30 wt.% does not appear to provide more benefits.

**Table 3: Mechanical properties of films**

| **Example** | **Modulus** (0.05-0.50% strain) [MPa] | **Yield stress** [MPa] | **Yield strain** [%] | **Break Stress** [Mpa] | **Break Strain** [%] | **Tear strength** [N/mm] |
|---|---|---|---|---|---|---|
| **1** | 582 ± 90 | 25 ± 1 | 5.3 ± 0.3 | 72 ± 6 | 286 ± 22 | 19 ± 3 |
| **2** | 646 ± 71 | 26 ± 2 | 5.2 ± 0.3 | 74 ± 6 | 302 ± 26 | 21 ± 4 |
| **3** | 543 ± 76 | 23 ± 1 | 5.2 ± 0.3 | 72 ± 4 | 298 ± 23 | 19 ± 4 |
| **4** | 700 ± 66 | 27 ± 1 | 4.7 ± 0.1 | 73 ± 11 | 298 ± 36 | 17 ± 4 |
| **C1** | 478 ± 63 | 23 ± 1 | 5.4 ± 0.1 | 65 ± 7 | 278 ± 28 | 30 ± 6 |
| **C2** | 725 ± 45 | 27 ± 1 | 6.6 ± 0.6 | 57 ± 8 | 245 ± 24 | 30 ± 4 |
| **C3** | 506 ± 135 | 26 ± 1 | 7.4 ± 0.6 | 48 ± 15 | 230 ± 37 | 30 ± 6 |
| **C4** | 544 ± 33 | 22 ± 1 | 8.3 ± 0.9 | 61 ± 5 | 300 ± 25 | 20 ± 2 |

### Evaluation of Tear Strength

The films of examples 1 to 4 and C1 to C4 were further characterized by measuring the tear strength as follows.

Out of the films of each formulation, five test specimen with dimensions of 50 x 150mm were punched out in film extrusion direction and subsequently slit for half their length (75mm) along the long dimension using a cutter.

The test specimen obtained were then submitted to tear tests conducted according to JIS K7128-1 (ISO 6383-1(1983)) on a benchtop tensiometer testing unit (INSTRON MODEL 4443) using a grip span of 75 mm and a speed of 200 mm/min. The average strength (N) is calculated from the section of the graph corresponding to a displacement of 20mm to 70mm. The results are summarized in table 3 above and table 4 below.

As apparent from the results, the tear strength of the films made with polyamide 6 modified with polyamide 11 (examples 1 to 4) was notably lower than for unmodified polyamide 6 (example C1). In contrast, the modification of polyamide 6 with an equivalent amount of a different polymer such as PEBA affects the tear strength only at a much higher level (see examples C2, C3 and C4).

### Evaluation of Transparency

The films of examples 1 to 4 and C1 to C4 were evaluated visually regarding transparency and further, their Haze was measured according to ASTM D1003-97. Films with a transparency comparable to polyamide 6 film of example C1 were rated as being "transparent". The results are summarized in table 4 below.

**Table 4: Overall Property Profile of films**

| Example | Break Stress (Mpa) | Variation vs. C1 [%] | Tear strength (MPa) | Variation vs. C1 [%] | Transparency | Haze (%) |
|---|---|---|---|---|---|---|
| 1 | 72 | + 13 | 19 | - 37 | Yes | 2.4 |
| 2 | 74 | + 16 | 21 | - 30 | Yes | 1.5 |
| 3 | 73 | + 14 | 19 | - 37 | Yes | 1.9 |
| 4 | 76 | + 19 | 17 | -43 | Yes | 3.8 |
| C1 | 64 | - | 30 | - | Yes | 1.4 |
| C2 | 57 | -7 | 30 | 0 | Yes | 2.4 |
| C3 | 48 | -16 | 30 | 0 | Yes | 3.9 |
| C4 | 61 | -3 | 20 | -33 | No | 13.9 |

| | | | | | | |
|---|---|---|---|---|---|---|
| ND : Non determined | | | | | | |

The experimental results presented above support the conclusion that adding a minor amount of a long chain polyamide such as polyamide 11 to a short chain polyamide such as polyamide 6 or polyamide 66, film strength (strength at break) can be improved by more than 15% while at the same time, transparency is preserved and tear strength is optimized.

Such property profile is advantageous for food packaging film, which are required to have strength to resist to handling and transportation, but to have low tear strength to facilitate the opening of packages.

In contrast, examples C2 to C4 show that adding another polymer such as PEBA does not yield such results. Indeed, the break strength does not improve, but moreover transparency suffers with higher PEBA content, as apparent from a higher Haze (see examples C3 and C4) and lower transparency (see example C4).

### [List of cited documents]

JPS6363748A
JP10728277A
JPH04314741
US 3,456,044

## Claims

1. Polyamide composition comprising :
(A) 70 - 99.9 wt.% of polyamide 6 and/or polyamide 66;
(B) 0.01 - 30 wt.% of at least one long chain semi-crystalline polyamide; and
(C) 0 - 30 wt.% of one or more additives,
it being understood that (A), (B) and (C) add up to 100 wt.%.

2. Polyamide composition according to claim 1, wherein component (A) is polyamide 6.

3. Polyamide composition according to claim 1 or claim 2, comprising 0.1 to 10 wt.% of component (B).

4. Polyamide composition according to claim 3, comprising 0.1 to 3 wt.% of component (B).

5. Polyamide composition according to any of claims 1 to 4, wherein component (B) is polyamide 11 or polyamide 12.

6. Polyamide composition according to any of claims 1 to 5, which has a relative viscosity of 1.0 to 3.0, as measured according to ISO 307-2019 in a solution of 0.005 g/mL in 96 wt.% sulfuric acid at 25°C.

7. Polyamide composition according to any of claims 1 to 6, in form of a film.

8. Process for the manufacture of a polyamide composition according to any of claims 1 to 7, comprising the steps consisting of:
(i) providing a polyamide (A) which is polyamide 6 and/or polyamide 66; and
(ii) mixing polyamide (A) with polyamide (B) which is at least one long chain semi-crystalline polyamide and optional additives (C) in a suitable vessel to obtain a polyamide composition.

9. Process according to claim 8, step (ii) is carried out in the melt, as a dry blend or by dissolution/precipitation.

10. Process according to claim 8 or 9, comprising a further step consisting of:
(iii) transforming the mixture obtained in step (ii) into a film.

11. Process according to claim 10, wherein step (iii) is carried out by extrusion.

12. Film comprising the polyamide composition according to any of claims 1 to 7.

13. Use of the film according to claim 12 for food packaging.

14. Use of a semi-crystalline long chain polyamide to improve the break stress of a film comprising polyamide 6 and/or polyamide 66.

15. A food-packaging comprising the polyamide composition according to any one of claims 1 to 7 or a film according to claim 12.
